# EUROPÄISCHE PATENTSCHRIFT

(11) **EP 2 680 958 B1**
(45) Veröffentlichungstag und Bekanntmachung des Hinweises auf die Patenterteilung: **09.12.2015**
(21) Anmeldenummer: 12702566.6
(22) Anmeldetag: 09.02.2012
(51) Int. Cl.: B01F 5/06, B01F 7/00, B01F 13/00, B01F 13/10, A61C 9/00, B05C 17/005, B01F 15/00

(54) **DYNAMISCHER MISCHER**
DYNAMIC MIXER
MÉLANGEUR DYNAMIQUE

(30) Priorität: 28.02.2011 EP 11156133
(43) Veröffentlichungstag der Anmeldung: 08.01.2014
(73) Patentinhaber: Sulzer Mixpac AG, 9469 Haag (CH)
(72) Erfinder: LINNE, Volker, 35119 Rosenthal-Roda (DE); HIEMER, Andreas, CH-8862 Schübelbach (CH); HÜSLER, Florian, CH-6300 Zug (CH)
(74) Vertreter: Manitz, Finsterwald & Partner GbR
(86) Internationale Anmeldenummer: PCT/EP2012/052201
(87) Internationale Veröffentlichungsnummer: WO 2012/116883

(56) Entgegenhaltungen:
- WO-A1-2007/041878
- DE-A1- 19 947 331
- DE-U1- 29 907 573
- US-A- 3 293 117
- US-A- 3 293 118
- US-A1- 2009 067 284

## Beschreibung

Die Erfindung betrifft einen dynamischen Mischer.

Aus der WO 2007/041878 A1 ist ein dynamischer Mischer zum Mischen von Komponenten mit unterschiedlichen Volumenanteilen bekannt, insbesondere zur Herstellung von Abformmassen für dentale Abdrücke. Im Innenraum des Mischergehäuses ist eine Vorkammer angeordnet, innerhalb welcher der Mischrotor einen Verteilkörper zum Verteilen der Komponenten um seine Rotationsachse aufweist, um dadurch ein richtiges Mischungsverhältnis zwischen den Komponenten zu erzielen und um Lufteinschlüsse zu vermeiden. Anschließend gelangen die vorgemischten Komponenten zu ihrem vollständigen Durchmischen durch mindestens eine Durchtrittsöffnung in eine Hauptkammer.

Insbesondere bei hohen Mischungsverhältnissen von viskosen, bzw. pastösen Komponenten ist es besonders schwierig das richtige Mischungsverhältnis konstant zu halten und eine gute Vermischung zu erhalten. Die Vermischung erfolgt im Allgemeinen durch Scherkräfte, wobei die Komponenten durch den Mischer gedrückt werden. Der Mischer weist ein Gehäuse und ein Rotorelement auf, welches in dem Gehäuse drehbar angeordnet ist, wobei das Gehäuse je eine Einlassöffnung für zumindest zwei Komponenten und mindestens eine Auslassöffnung aufweist. Zwischen dem Rotorelement und dem Gehäuse ist ein ringförmiger Zwischenraum vorgesehen, in welchem ein an dem Rotorelement angebrachtes Mischelement angeordnet ist. Das Rotorelement besteht aus dem Rumpfelement und dem Mischelement. Dieses Mischelement ist als Flügelelement ausgebildet, welches vom Rumpfelement weg in den Zwischenraum ragt. Vorzugsweise ist eine Mehrzahl derartiger Flügelelemente vorhanden. Zusätzlich können auch statische Mischelemente von der Innenwand des Gehäuses in den Zwischenraum hineinragen, was herstelltechnisch aber nur schwer realisierbar ist. Die Komponenten werden durch das oder die Flügelelemente sowie die eventuell zusätzlich vorgesehenen statischen Mischelemente mehrfach in einer knetenden Art und Weise umgelagert. Ziel ist es, eine möglichst große Phasengrenzfläche zwischen den Komponenten zu erzeugen, indem durch Aufteilung und Umlagerung der strömenden Komponenten viele und möglichst feine Schichten erzeugt werden, um eine Mischwirkung zu erzielen. Diese Mischwirkung wurde bis anhin mit Mischelementen erzeugt, mittels welchen als Folge der Bewegung des Rotorelements quer zur Hauptströmungsrichtung die Ströme aufgeteilt werden und ein Teil der Füllmasse mehrheitlich entgegen der Hauptströmungsrichtung weggedrängt wird, damit nachströmende Füllmasse hinter dem Mischelement nachströmt und derart eine Umlagerung und Schichtenbildung der Komponenten in der Füllmasse erzielt wird. Schwierigere Mischaufgaben führen zu längeren Mischern, größerem Kraftaufwand und somit erhöhtem Energieverbrauch für den Mischerantrieb und größerem Widerstand, um die Komponenten durch den Mischer zu drücken.

Daher musste man bisher mit folgenden nachteiligen Konsequenzen zurecht kommen: einem längeren Mischer, einem erhöhten Energieverbrauch sowie auch einem erhöhten Druckverlust. Demzufolge müssen größere und schwerere Antriebsaggregate und Batterien für das Austragsgerät vorgesehen werden, was die Handhabung für die Applikation des Gemisches einschränkt, den Energiebedarf erhöht und im Falle von Batteriebetrieb die Einsatzzeiten des Austragsgeräts reduziert.

Da bei einer Unterbrechung des Austrags die Komponenten im Mischer miteinander reagieren und aushärten, muss der Mischer nach Gebrauch zusammen mit den darin enthaltenen Komponenten ersetzt und entsorgt werden.

Die WO2005/082549 A2 zeigt einen dynamischen Mischer, der Mischelemente aufweist, die entlang der Rotornabe angeordnet sind und in den Mischraum hineinragen. Die Mischelemente haben einen dreieckigen, rechteckigen oder trapezförmigen Querschnitt. Die Spitze des Dreiecks oder die kürzere der beiden parallelen Seiten des Trapezes werden angeströmt. Wie bereits in der WO2007/041878 A1 wird insbesondere bei den Mischelementen mit dreieckigem oder trapezförmigem Querschnitt ein Teil der Füllmasse mehrheitlich entgegen der Hauptströmungsrichtung, also in Richtung des Mischereinlasses weggedrängt, damit nachströmende Füllmasse hinter dem Mischelement nachströmt und derart eine Umlagerung und Schichtenbildung der Komponenten in der Füllmasse erzielt wird, was zu den selben Nachteilen führen wird, die schon in der WO2007/041878 A1 genannt sind.

Das Dokument DE 102 42 100 A1 zeigt einen Rührermischer, der einen um eine Mittenachse drehbaren Rührer aufweist. Der Rührer ist als Schrägblatt-Rührer ausgeführt, Die Drehrichtung des Rührers ist derart gewählt, dass der Rührer in Richtung des Gemischaustritts axial fördert, so dass ein axialer Pumpeffekt entsteht, was zur Folge hat, dass der Mischkammerdruck mit zunehmender Rührerdrehzahl abgesenkt oder konstant gehalten werden kann. Zwar kann mit diesem Rührermischer eine verbesserte Förderwirkung sowie ein geringerer Druckverlust erzielt werden, allerdings hat dies zur Folge, dass die Mischwirkung in Bezug auf ein einzelnes Schrägblattrührelement abnimmt. Aus diesem Grund erhöht sich die Mischerlänge, so dass diese Lösung der Zielsetzung entgegen steht, einen Mischer möglichst geringer Baulänge zu schaffen.

Das Dokument WO98/43727 A1 zeigt einen dynamischen Mischer mit Mischelementen, die im Querschnitt rautenförmig (oder zylindrisch) sind. Zwischen der Rotornabe und dem Mischergehäuse ist ein Mischkanal ausgebildet, dessen Durchmesser in Richtung der Auslassseite des Mischers abnimmt. Hierdurch wird eine Beschleunigung der Axialbewegung der Füllmasse erreicht, das heißt, die Füllmasse durchströmt den Mischer schneller, allerdings wird die Mischgüte nur mit zusätzlichen Maßnahmen erhöht, nämlich indem die Mischerflügel in unterschiedlicher Richtung in unterschiedlichen Axialbereichen der Mischerwelle angeordnet sind, was wiederum einen Erhöhung des Druckverlusts zur Folge hat. Eine ähnliche Lösung ist auch in den Fig. 6, 7 der DE199 47 331 A1 gezeigt, mit einem wesentlichen Unterschied, dass das Mischergehäuse relativ zur ortsfesten Mischernabe drehbar ist. Um mit dieser Lösung eine ausreichende Durchmischung höherviskoser Massen zu erzielen, sind die Mischerflügel in einer größeren Anzahl von Ebenen angeordnet, was eine größere axiale Baulänge des Mischers zur Folge hat.

Das Dokument DE 101 12 904 A1 zeigt einen dynamischen Mischer, der eine Verzögerungskammer aufweist, so dass die Komponente mit dem größeren Volumenanteil verzögert in Bezug auf die Komponente mit dem kleinen Volumenanteil in die Mischkammer eintritt. Hiermit kann sichergestellt werden, dass beide Komponenten von Beginn an durchmischt werden, so dass die Mischerlänge insgesamt verringert werden kann. Allerdings ist darauf zu achten, dass keine Totzonen entstehen. Die Flügelelemente sollen keine Förderwirkung entfalten. Daher ist in dem Bereich der Mischkammer, welcher die Flügelelemente enthält, keine Verbesserung der Mischqualität gegenüber der WO 2007/041878 A1 erzielbar.

Das Dokument DE 10 2007 059 078 A1 zeigt einen dynamischen Mischer, der trapezförmige Flügelelemente und Lochplatten als Zwischenelemente aufweist. Die Anordnung dient dazu, die Rotation der Medien im Mischer zu verzögern, was für schnell aushärtende Komponentenmischungen nachteilig sein kann. Eine wie immer geartete Förderwirkung wäre mit dieser Anordnung nicht gewollt, weil der gegenteilige Effekt angestrebt ist.

Das Dokument US2009/0034357 A1 zeigt einen dynamischen Mischer mit einem Umlenkelement, welches am auslassseitigen Ende der Rotornabe angeordnet ist. Die Mischelemente der US2009/0034357 A1 entsprechen im Wesentlichen der DE 101 12 904 A1. Dieses Dokument zeigt somit, dass die Mischwirkung der Flügelelemente als nicht ausreichend anzusehen ist und daher noch ein zusätzliches Element, nämlich das Umlenkelement vorzusehen ist, um die Mischgüte zu erhöhen. Alternativ kann ein statischer Mischer zu diesem Zweck am Auslassende des Mischers vorgesehen sein, wie das Dokument US2009/0207685 A1 zeigt. Die Flügelelemente mit trapezförmigem Querschnitt wurden bereits in der WO2005/082549 A2 gezeigt.

Gemäß EP 1 099 470 A1 sind am Mischergehäuse angebrachte ortsfeste Abstreifelemente zwischen den an der Rotornabe drehbar angeordneten Flügelelementen vorgesehen. Diese Abstreifelemente haben keine Förderwirkung, sondern dienen der Verbesserung der Durchmischung.

Das Dokument DE 199 47 331 zeigt einen dynamischen Mischer mit einer Lagerung der Rotornabe im Mischerauslass. Dadurch, dass die Rotornabe im Mischerauslass gelagert ist, besitzt sie einen Kanal zum Austrag des Gemisches. Die Mischflügel scheinen keine wie immer geartete Förderwirkung zu haben, dann in Spalte 3, Zeile 48 wird darauf hingewiesen, dass die Kolben die Masse nach außen drücken. Diese Kolben dürften zu einem Stößel eines Austragsgeräts gehören, mittels welchem den Kartuscheninhalt ausgepresst wird.

Die Druckschrift US 3,293,117 beschreibt den Vorgang des Mischens von Flüssigkeiten mit einem Fasermaterial bei hohen Konzentrationen an Fasermaterial, wobei bei der dort vorgeschlagenen Vorrichtung eine zylindrische Mischkammer vorgesehen ist mit einem Einlass für das Fasermaterial an einem Ende und einem Auslass des Fasermaterials am gegenüberliegenden anderen Ende, mit einer Einrichtung zum druckbeaufschlagten Transportieren des Fasermaterials vom Einlass zum Auslass unter gleichzeitiger Zufuhr einer flüssigen Komponente, welche quer zur Transportrichtung des Fasermaterials auf dem Transportweg stromabwärts vom Einlass des Fasermaterials der Mischkammer zugeführt wird.

Die Druckschrift US 3,293,118 beschreibt eine dazu abgewandelte Ausführungsform, bei welcher eine Dampfbehandlung des transportierten Fasermaterials in der Mischkammer zwischen dem Einlass und dem Auslass des Fasermaterials erfolgt.

Die DE 199 47 331 A1 und die US 2009/0067284 A1 beschreiben dynamische Mischer mit einem Rotor und einem Stator, die zum Durchmischen dentaler Massen ausgebildet sind.

Die DE 299 07 573 U1 betrifft einen dynamischen Mischer, bei welchem in einem Mischkanal an dessen Innenwand Vorsprünge vorgesehen sind, um im Betrieb mit Vorsprüngen eines Rotors bei deren Bewegung zueinander veränderliche verengte Durchflussspalte auszubilden.

Aufgabe der Erfindung ist daher, für schwierige Mischaufgaben einen Mischer zu finden, welcher eine kurze Baulänge aufweist und mit möglichst wenig Energieaufwand für den Rotor sowie einem kleineren Druckverlust durch den Mischer auskommt. Die Mischer werden in hohen Stückzahlen produziert. Mit kleinen Mischern lassen sich Werkstoff für den Mischer, Komponenten wie auch Kosten für die Entsorgung der gebrauchten Mischer einsparen.

Die der Erfindung zu Grunde liegende Aufgabe wird bei einem dynamischen Mischer erfindungsgemäß mit den Merkmalen des Anspruchs 1 gelöst. Bevorzugte Weiterbildungen des erfindungsgemäßen dynamischen Mischers sind in den abhängigen Ansprüchen definiert.

Die Aufgabe der Erfindung wird mit einem dynamischen Mischer für eine Mehrzahl von fluiden Komponenten gelöst, welcher ein Gehäuse und ein Rotorelement enthält, welches in dem Gehäuse drehbar angeordnet ist. Das Gehäuse weist eine Einlassöffnung für zumindest je eine Komponente und mindestens eine Auslassöffnung auf, wobei zwischen dem Rotorelement und dem Gehäuse ein ringförmiger Zwischenraum vorgesehen ist, in welchem ein mit dem Rotorelement verbundenes Mischelement angeordnet ist. Das Mischelement weist ein Flügelelement auf, welches als Leitelement zur Förderung der Komponenten von der Einlassöffnung zu der Auslassöffnung ausgebildet ist. Das Flügelelement ist ein Leitelement und weist eine Leitfläche auf, die eine konkave Krümmung bezogen auf die Auslassöffnung aufweist und anströmseitig weiter entfernt von der Auslassöffnung ist als abströmseitig.

Nach einem Ausführungsbeispiel überdeckt das Flügelelement nicht mehr als 50% einer durch den Zwischenraum gelegten Ebene, welche das Flügelelement enthält und normal auf die Achse des dynamischen Mischers ausgerichtet ist. Eine Mehrzahl von Flügelelementen kann in mindestens zwei parallelen Ebenen im Wesentlichen senkrecht zur Achse des dynamischen Mischers angeordnet sein.

Nach einem Ausführungsbeispiel sind ein erstes Flügelelement und ein zweites Flügelelement stromabwärts des ersten Flügelelements in einer Hauptkammer angeordnet, wobei der kürzeste Abstand zwischen dem ersten Flügelelement zum zweiten Flügelelement mindestens ein Drittel des Abstandes zwischen dem Rotorelement und der durch das Gehäuse gegebenen Abgrenzung der Hauptkammer ist. Der kürzeste Abstand ist hierbei definiert als der Abstand zwischen der Abgrenzung der Hauptkammer im Gehäuse und dem Flügelelement in Richtung der Längsachse des dynamischen Mischers.

Nach einem Ausführungsbeispiel weist das Flügelelement eine im Wesentlichen trapezförmige Querschnittsfläche auf. Insbesondere können die Flügelelemente anströmseitig eine Staufläche aufweisen, wobei die Ebene der Staufläche parallel zur Achse des Rotorelementes oder in einem Winkel derart angeordnet ist, so dass die Staufläche in Richtung der Auslassöffnung weist.

Die Flügelelemente des dynamischen Mischers können insbesondere paarweise zueinander angeordnet sein. Paarweise Anordnung bedeutet hierbei, dass jeweils zwei Flügelelemente in einer Ebene angeordnet sind, die normal zur Rotorachse gelegt ist. Insbesondere können die Flügelelemente einer paarweisen Anordnung gegenüberliegend angeordnet sein. Das heißt, ein erstes Flügelelement kann um 180 Grad versetzt zu einem zweiten Flügelelement eines Flügelelementpaars angeordnet sein. Für benachbarte Paare von Flügelelementen gilt, dass das Flügelelement eines ersten Paars von Flügelelementen zu einem zweiten Paar von Flügelelementen in Auslassrichtung oder entgegen der Auslassrichtung entlang der Rotorachse verschoben sowie um einen Winkel verdreht angeordnet ist. Insbesondere ist die geometrische Anordnung von zwei benachbarten Paaren von Flügelelementen derart, dass das erste Paar von Flügelelementen durch eine axiale Verschiebung entlang der Rotorachse und eine anschließende Drehung um 90 Grad um die Rotorachse in das zweite Paar von Flügelelementen übergeführt werden kann.

Benachbarte Paare von Flügelelementen können eine unterschiedliche geometrische Konfiguration aufweisen. Insbesondere können benachbarte Paare von Flügelelementen eine geometrische Konfiguration aufweisen, die abwechselnd fördernd oder nicht fördernd ist. Unter "fördernd" soll hierbei insbesondere verstanden werden, dass die Neigung und Krümmung zumindest einer Leitfläche des Flügelelements ein Nachströmen von darüber liegender Füllmasse begünstigt und zur Vermischung beiträgt.

Nach einem Ausführungsbeispiel weist das Gehäuse des dynamischen Mischers einen ersten Gehäuseteil und einen zweiten Gehäuseteil auf, wobei der erste Gehäuseteil die Einlassöffnungen enthält und der zweite Gehäuseteil die Auslassöffnung enthält. Nach einem Ausführungsbeispiel ist das Rotorelement im ersten Gehäuseteil gelagert.

Nach einem Ausführungsbeispiel weist das Flügelelement die anströmseitige Staufläche, eine abströmseitige Endfläche, eine sich am äußeren Umfang zwischen anströmseitiger Staufläche und abströmseitiger Endfläche erstreckende Mantelfläche, eine Grundfläche, die den Einlassöffnungen zugewendet ist, sowie eine Deckfläche, die der Auslassöffnung zugewendet ist, auf.

Insbesondere kann die Mantelfläche eine den Einlassöffnungen zugewendete Grundkante aufweisen, die eine kontinuierliche Krümmung aufweist. Der Krümmungsradius nimmt nach einem Ausführungsbeispiel von der Grundkante von der anströmseitigen Staufläche zur abströmseitigen Endfläche zu. Alternativ oder in Kombination hiermit kann die Grundkante s-förmigen Verlauf haben. Insbesondere kann der Krümmungsradius der Grundkante von der Anströmseite zur Abströmseite abschnittsweise konstant sein. Alternativ oder in Ergänzung kann die Mantelfläche eine der Auslassöffnung zugewendete Deckkante aufweisen, welche eine kontinuierliche Krümmung aufweist. Der Verlauf der Krümmung der Deckkante kann sich vom Verlauf der Krümmung der Grundkante unterscheiden.

Die Krümmung kann einen minimalen Krümmungsradius von 1 mm und einen maximalen Krümmungsradius von 100 mm aufweisen, bevorzugt einen maximalen Krümmungsradius von bis zu 50 mm aufweisen.

Bevorzugt enthält der Mischer maximal 5 Reihen von Flügelelementen, bevorzugt maximal 4 Reihen von Flügelelementen, besonders bevorzugt maximal 3 Reihen von Flügelelementen, die auf dem Rotorelement angeordnet sind. Hierdurch wird die Baulänge des Mischers gegenüber dem Stand der Technik stark reduziert. Demzufolge ergibt sich nicht nur in eine Senkung der Herstellkosten, sondern auch das Füllvolumen wird verringert, sodass die nach dem Gebrauch des Mischers im Mischkanal verbleibende Füllmasse verringert ist. Daher kann mit dem Mischer gemäß eines der Ausführungsbeispiele auch der Ausschussanteil an Füllmasse gesenkt werden.

Das Gehäuse umfasst eine erste Vorkammer und eine Hauptkammer, wobei die Einlassöffnungen in die erste Vorkammer münden, in welcher die Komponenten erstmals zusammengeführt werden. Zwischen der ersten Vorkammer und der Hauptkammer ist eine zweite Vorkammer vorgesehen. Zwischen der ersten Vorkammer und der zweiten Vorkammer ist mindestens eine Öffnung zwischen dem Rotorelement und dem Gehäuse für den Durchtritt der Komponenten vorgesehen. In zumindest einer der ersten und zweiten Vorkammern kann nach einem Ausführungsbeispiel ein Mischelement angeordnet sein. Die Komponenten können in der zweiten Vorkammer radial in Richtung Rotorelement geführt werden, sowie durch die gehäuseseitig oder am Rotorelement angebrachten Mischelemente geführt werden, bevor sie nach einer Umlenkung in axialer Richtung in die Hauptkammer geführt werden.

Nach einem Ausführungsbeispiel weist der erste Gehäuseteil bei mindestens einer der Einlassöffnungen eine Vorrichtung zum Durchstechen eines die Komponenten enthaltenden Behältnisses auf.

Es hat sich gezeigt, dass entgegen der allgemeinen Meinung des Standes der Technik auch gute Ergebnisse bezüglich Umlagerung und Schichtenbildung erzielt werden, wenn zumindest durch einzelne Mischelemente die Füllmasse zumindest in der Nähe dieser Mischelemente nicht entgegen, sondern in Richtung der Hauptströmungsrichtung in Richtung der Auslassöffnung gedrängt wird und dahinter stromabwärts befindliche Füllmasse aus dem langsamer strömenden Hauptstrom nachgezogen wird. Der Hauptstrom befindet sich zwischen der Innenwand des Gehäuses und dem Rotorelement Die Geometrie der Mischelemente beeinflusst die Strömung im Wesentlichen nur lokal, beeinflusst aber die Mischwirkung, den Drehwiderstand des Rotorelementes und Druckverlust der Komponenten durch den Mischer. Mindestens ein Teil dieser Mischelemente haben entsprechend eine Förderwirkung, welche den Widerstand für das Durchdrücken der Komponenten und der Kraftaufwand für den Rotorantrieb vermindert. Es hat sich auch gezeigt, dass für eine geforderte Mischwirkung die Verweilzeit der Komponenten im dynamischen Mischer verkleinert werden kann und somit insgesamt der dynamische Mischer kompakter und mit weniger Inhalt gebaut werden kann.

Das Mischungsverhältnis der ersten und der zweiten Komponente kann 1:1 betragen, kann aber auch 1:10 bis 1:50 oder sogar darüber liegen.

Die Verwendung des dynamischen Mischers erfolgt bevorzugt in autonomen Hand-Austragsgeräten oder in stationären Tischgeräten.

Nachfolgend wird die Erfindung anhand der Zeichnungen erläutert. Es zeigen:
- Fig. 1: einen Schnitt durch einen dynamischen Mischer,
- Fig. 2: einen Schnitt durch einen dynamischen Mischer gemäß eines Ausführungsbeispiels der Erfindung,
- Fig. 3: eine Ansicht eines Rotorelements für einen dynamischen Mischer,
- Fig. 4: eine Ansicht eines Rotorendes nach einer ersten erfindungsgemäßen Variante,
- Fig. 5: eine Ansicht eines Rotorendes nach einer zweiten erfindungsgemäßen Variante.

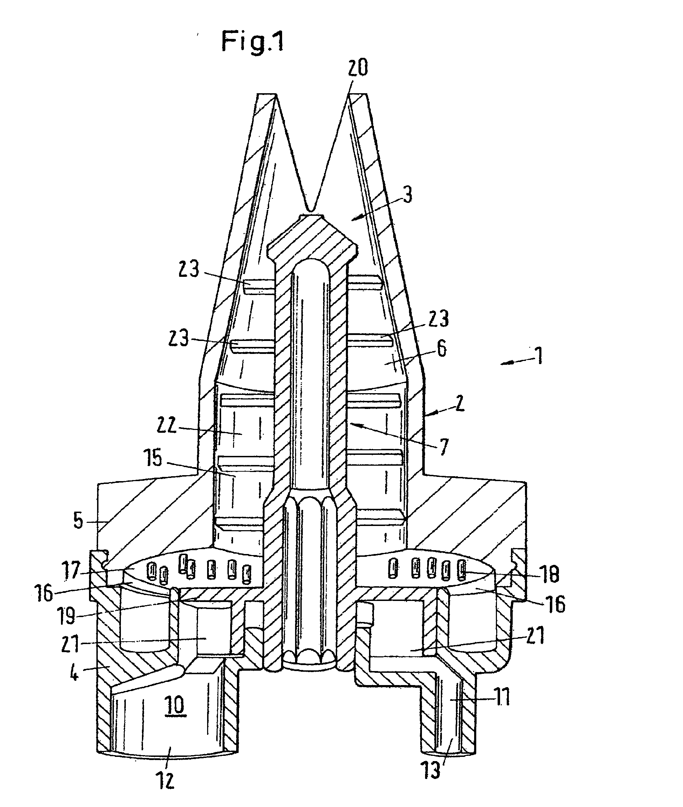

Fig. 1 zeigt einen dynamischen Mischer für eine Mehrzahl von fluiden Komponenten. Der dynamische Mischer 1 weist ein Gehäuse 2 und ein Rotorelement 3 auf, welches in dem Gehäuse 2 drehbar um eine Rotorachse 8 angeordnet ist. Bei dem dargestellten Beispiel ist das Gehäuse 2 zweiteilig aufgebaut, es enthält einen ersten Gehäuseteil 4, in welchem sich der Zulauf der Komponenten befindet und einen zweiten Gehäuseteil 5, welcher zur Erzeugung einer Mischung aus der Mehrzahl von fluiden Komponenten dient. Der erste Gehäuseteil wird mit dem zweiten Gehäuseteil über eine Rastverbindung, Schnappverbindung oder eine Schweißverbindung verbunden, sobald das Rotorelement 3 in dem zweiten Gehäuseteil 5 aufgenommen ist. Der erste Gehäuseteil 4 weist eine Einlassöffnung 12, 13 für zumindest je eine Komponente auf. Die Einlassöffnungen 12,13 können unterschiedlichen Durchmesser aufweisen, der vom gewünschten Mischungsverhältnis der Komponenten abhängig ist. Die Einlassöffnungen münden in korrespondierende Einlasskanäle 10, 11, die im ersten Gehäuseteil 4 angeordnet sind. Die Einlasskanäle 10, 11 münden in eine erste Vorkammer 21 die mit im Wesentlichen als äußeren Ringspalt ausgeführten Austrittsöffnungen 16 versehen ist, welche in einen Innenraum 15 des zweiten Gehäuseteils 5 münden.

Der zweite Gehäuseteil 5 weist mindestens eine Auslassöffnung 20 auf. Durch die zweite Auslassöffnung 20 verlässt das Gemisch der Komponenten den dynamischen Mischer. Die Auslassöffnung 20 kann entsprechend der vorgesehenen Anwendung speziell ausgestaltet sein. In dem vorliegenden Fall ist ein v-förmiger Einschnitt vorgesehen. Mit Hilfe dieses v-förmigen Einschnitts ergibt sich beim Austragen der Füllmasse die Form einer Dreiecksraupe. Der Innenraum 15 des zweiten Gehäuseteils 5 dient zur Aufnahme des Rotorelements 3.

Der Innenraum 15 weist eine zweite Vorkammer 17 und eine Hauptkammer 22 auf. In der zweiten Vorkammer 17 kommen die Komponenten, welche in der ersten Vorkammer 21 zum ersten Mal miteinander in Kontakt gebracht und vorvermischt worden sind. Die Komponenten werden von der zweiten Vorkammer 17 zu der Hauptkammer 22 geleitet. In der zweiten Vorkammer 17 kann eine weitere Vermischung erfolgen. Hierzu ist in der Vorkammer eine Mehrzahl von Mischelementen 18 angeordnet. Diese Mischelemente sind als Stiftelemente ausgeführt, welche in die Vorkammer hineinragen. Die Stiftelemente können alternativ auf einer Drehfläche 19 des Rotorelements 3 angeordnet sein oder wie in Fig. 1 dargestellt von der Innenwand des Gehäuses, welche die Vorkammer begrenzt, in die Vorkammer 17 hineinragen. Durch die Drehfläche 19 und die Stiftelemente 18 werden Scherkräfte auf die Komponenten ausgeübt. Hierdurch werden die Komponenten relativ feinräumig miteinander vermengt.

Zwischen dem Rotorelement 3 und der Innenwand 6 des Gehäuses ist ein ringförmiger Zwischenraum vorgesehen, welcher die Hauptkammer 22 bildet, in welchem ein mit dem Rotorelement 3 verbundenes Mischelement 7 angeordnet ist. Das Mischelement 7 umfasst in der Hauptkammer 22 eine Mehrzahl von Flügelelementen 23. Die Flügelelemente 23 ragen als Vorsprünge in die Hauptkammer 22. In dieser Hauptkammer 22 erfolgt die abschließende Durchmischung der Komponenten, indem die Komponenten von den Flügelelementen erfasst werden und umgelagert werden. Zumindest ein Teil der Flügelelemente ist als Leitelement zur Förderung der Komponenten durch den Innenraum 15 in Richtung der Auslassöffnung 20 ausgebildet.

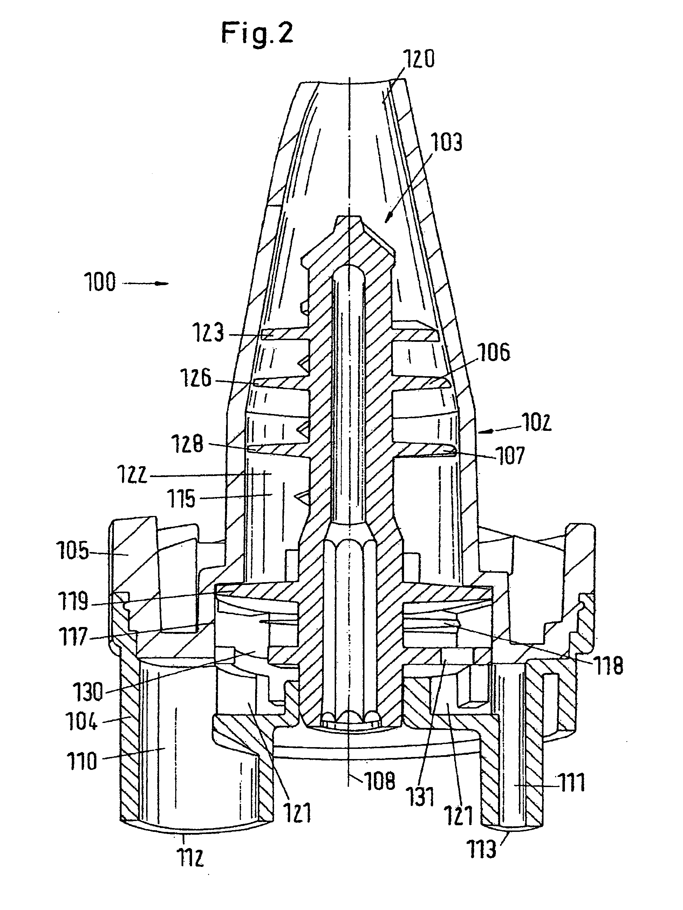

Fig. 2 zeigt einen Schnitt durch einen dynamischen Mischer gemäß eines Ausführungsbeispiels der Erfindung für die Vermischung einer Mehrzahl von fluiden Komponenten. Der dynamische Mischer 100 weist ein Gehäuse 102 und ein Rotorelement 103 auf, welches in dem Gehäuse102 drehbar um eine Rotorachse 108 angeordnet ist. In der vorliegenden Ausführungsform ist das Gehäuse 102 zweiteilig aufgebaut, es enthält einen ersten Gehäuseteil 104, in welchem sich die Zuläufe der Komponenten befinden und einen zweiten Gehäuseteil 105, welcher zur Erzeugung einer Mischung aus der Mehrzahl von fluiden Komponenten dient. Der erste Gehäuseteil wird mit dem zweiten Gehäuseteil über eine Rastverbindung, Schnappverbindung oder eine Schweißverbindung verbunden, sobald das Rotorelement 103 in dem zweiten Gehäuseteil 105 aufgenommen ist. Der erste Gehäuseteil 104 weist je eine Einlassöffnung 112, 113 für zumindest je eine Komponente auf. Die Einlassöffnungen 112, 113 können unterschiedlichen Durchmesser aufweisen, der vom gewünschten Mischungsverhältnis der Komponenten abhängig ist. Die Einlassöffnungen münden in korrespondierende Einlasskanäle 110, 111, die im ersten Gehäuseteil 104 angeordnet sind. Die Einlasskanäle 110, 111 münden in eine erste Vorkammer 121 die mit Austrittsöffnungen 130, 131 versehen ist, welche in einen Innenraum 15 des zweiten Gehäuseteils 105 münden.

Der zweite Gehäuseteil 105 weist mindestens eine Auslassöffnung 120 auf. Durch die Auslassöffnung 120 verlässt das Gemisch der Komponenten den dynamischen Mischer. Der Innenraum 115 des zweiten Gehäuseteils 105 dient zur Aufnahme des Rotorelements 103.

Der Innenraum 115 umfasst eine zweite Vorkammer 117 und eine Hauptkammer 122. In der zweiten Vorkammer 117 kommen die Komponenten welche in der ersten Vorkammer 121 zum ersten Mal miteinander in Kontakt gebracht und vorvermischt worden sind. Die Komponenten werden von der zweiten Vorkammer 117 zu der Hauptkammer 122 geleitet. In der zweiten Vorkammer 117 kann eine weitere Vorvermischung erfolgen. Hierzu ist in der zweiten Vorkammer 117 ein Mischelement 118 angeordnet. Das Mischelement 118 ist als Flügelelement ausgebildet, welches mit dem Rotorelement 103 verbunden ist. Zusätzlich können weitere Flügelelemente 118, auf einer Drehfläche 119 des Rotorelements 103 angeordnet sein, was in Fig. 2 nicht dargestellt ist. Durch die Drehfläche 119 und die Mischelemente 118 werden Scherkräfte auf die Komponenten ausgeübt. Hierdurch werden die Komponenten weiter miteinander vermengt

Zwischen dem Rotorelement 103 und der Innenwand des Gehäuses ist ein ringförmiger Zwischenraum vorgesehen, in welchem ein mit dem Rotorelement 103 verbundenes Mischelement 107 angeordnet ist.

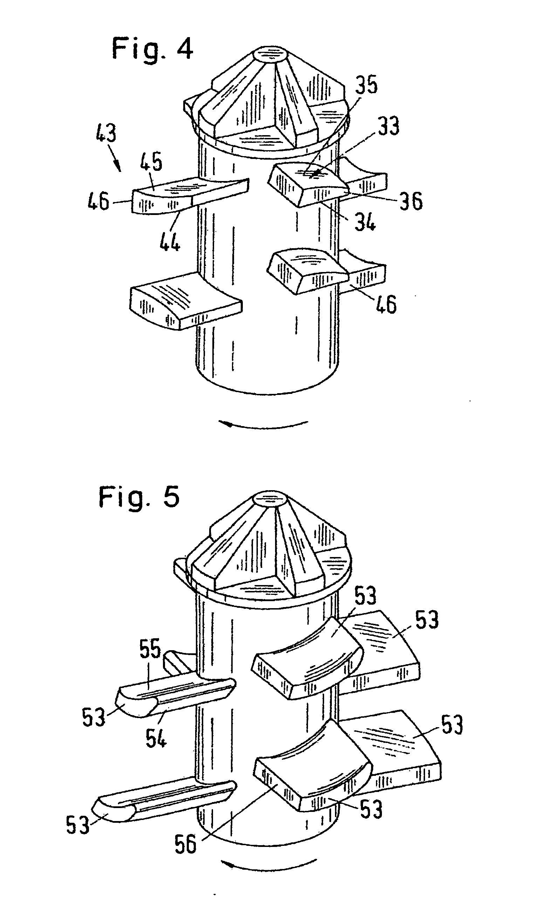

Das Mischelement 107 umfasst in der Hauptkammer 122 eine Mehrzahl von Flügelelementen 123, Die Flügelelemente 123 ragen als Vorsprünge in den Innenraum 115, welcher die Hauptkammer 122 bildet. In dieser Hauptkammer erfolgt die Durchmischung der Komponenten, indem die Komponenten von den Flügelelementen erfasst werden und umgelagert werden. Zumindest ein Teil der Flügelelemente ist als Leitelement zur Förderung der Komponenten durch den Innenraum 115 in Richtung der Auslassöffnung 120 ausgebildet. Diese Flügelelemente 123 sind gemäß der in den Fig. 4 oder 5 dargestellten Flügelelemente 43 bzw. 53 ausgebildet.

Es ist auch nicht erforderlich, dass benachbarte, in Bezug auf die Rotorachse 108 hintereinander angeordnete Flügelelemente von einander den gleichen Abstand aufweisen. Beispielsweise ist der Abstand des Flügelelements 123, welches nächstgelegen zur Auslassöffnung 120 angeordnet ist, zu dem Flügelelement 126 kleiner als der Abstand des Flügelelements 126 zu dem Flügelelement 128.

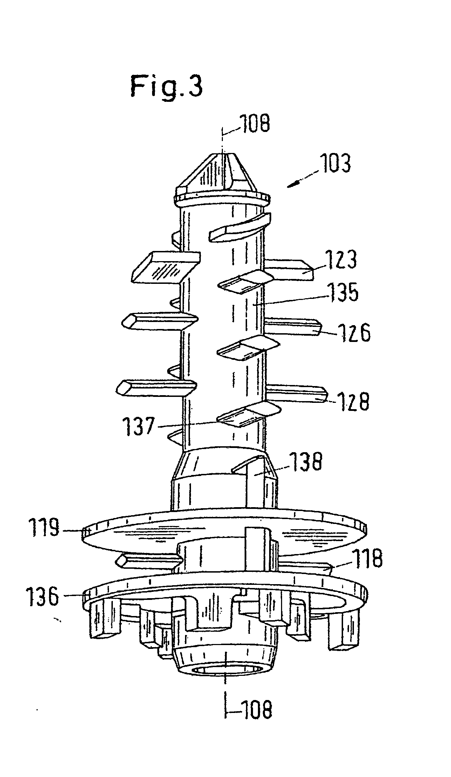

Fig. 3 zeigt eine Ansicht eines Rotorelements zum Einsatz in einem erfindungsgemäßen dynamischen Mischer. Das Rotorelement entspricht dem in Fig. 2 dargestellten Rotorelement 102, daher werden für gleiche Teile die gleichen Bezugszeichen wie in Fig. 2 verwendet. Allerdings ist diese Bezugnahme nicht als Einschränkung dahingehend zu verstehen, dass das Rotorelement nur in Zusammenhang mit dem Ausführungsbeispiel gemäß Fig. 2 verwendbar ist. Vielmehr kann das Rotorelement unter einer geringfügigen Anpassung der Geometrie des Gehäuses ebenfalls in einem Gehäuse gemäß einem anderen Beispiel verwendet werden. Das Rotorelement 103 hat eine Rotorachse 108, entlang derer eine Rotorelementnabe 135 angeordnet ist. Die Rotorelementnabe 135 trägt ein Kranzelement 136, welches die Austrittsöffnungen 130, 131 enthält. Durch diese Austrittsöffnungen 130, 131 treten die von den Einlasskanälen 110, 111 (siehe Fig. 2) in die erste Vorkammer 121 zugeführten Komponenten in die zweite Vorkammer 117 aus. Das Kranzelement 136 stellt eine Begrenzung der ersten Vorkammer 121 dar. Am Kranzelement 136 sind Leitelemente angebracht, die in erste Vorkammer 121 ragen. Die am Kranzelement 136 angebrachten äußeren Leitelemente scheren die Komponenten von den Austrittsöffnungen der Einlasskanäle 110, 111 ab und führen sie in den Raum der ersten Vorkammer 121 und bewirken ein erstes in Kontaktbringen der Komponenten und sichern das Konstanthalten des Mischungsverhältnisses. Weiter innen liegende Leitelemente ergeben eine erste Vorvermischung. Eine zweite Begrenzung der zweiten Vorkammer 117 ist die Drehfläche 119, die stromabwärts des Kranzelements 136 auf der Rotorelementnabe 135 angebracht ist. Umfangsseitig wird die Vorkammer 117 vom zweiten Gehäuseteil 105 begrenzt (siehe Fig. 2).

Die Komponenten werden durch ein Mischelement 118, welches in der Vorkammer auf der Rotorelementnabe 135 und allenfalls an der Drehfläche 119 oder stromabwärtsseitigen Kranzelement 136 angeordnet ist, vorvermischt. Das Mischelement kann als Flügelelement nach einem der Ausführungsbeispiele gemäß 4 oder 5 ausgebildet sein.

Um in die Hauptkammer 122 (siehe Fig. 2) zu gelangen, umfließen die Komponenten die Drehfläche 119. Zwischen der Drehfläche 119 und der Innenwand des zweiten Gehäuseteils verbleibt ein schmaler ringförmiger Spalt oder ringförmige Spaltsegmente, durch den die Komponenten hindurch treten und über gehäuseseitig geformte Zuführkanäle in die Hauptkammer gelangen. Des Weiteren sind stromabwärts der Drehfläche 119 in der Hauptkammer Flügelelemente 123, 126, 128 angeordnet, die als Leitelemente ausgestaltet sind. Zusätzlich können Flügelelemente 137 vorgesehen sein, die rautenförmig ausgebildet sind, wie beispielsweise in WO98/43727 beschrieben. Des Weiteren ist ein bogenförmiges Flügelelement 138 gezeigt, welches unmittelbar an die Drehfläche 119 angrenzt und die Füllmasse von den Eintrittsöffnungen abschert und in die Hauptkammer leitet. Ähnliche Flügelelemente können auch weiter stromabwärts angeordnet werden, welche ein Abstreifen der Füllmasse von der Wand der Hauptkammer 22,122 bewirken.

Vorzugsweise sind gleichartige Flügelelemente gegenüberliegend zueinander auf derselben Höhe angeordnet, wobei die Höhe entlang der Rotorachse 108 gemessen wird.

Fig. 4 ist eine Ansicht eines Rotorendes eines Rotorelementes 3, 103 nach einer ersten erfindungsgemäßen Variante, welche Leitelemente unterschiedlicher Bauweise enthält. Das Flügelelement 33 weist eine erste Leitfläche 34 auf, welche in Richtung der zweiten Vorkammer 17, 117 ausgerichtet ist und eine zweite Leitfläche 35, die in Richtung der Auslassöffnung 20, 120 gerichtet ist. Die zweite Leitfläche 35 weist eine konvexe Krümmung auf. Der Normalabstand zwischen der ersten Leitfläche und der zweiten Leitfläche nimmt in Drehrichtung zu. Insbesondere kann das hintere Ende der ersten und zweiten Leitfläche als eine Kante 36 ausgebildet sein. Gegenüberliegend zu der Kante 36 befindet sich eine vorzugweise relativ zu der Rotorachse geneigte Anströmfläche, an welcher die auf das Leitelement zuströmende Füllmasse geteilt und in Richtung Auslassöffnung 20, 120 gedrängt wird. Die Neigung und Krümmung der Leitfläche 35 begünstigt ein Nachströmen von darüber liegender Füllmasse und trägt so zur Vermischung bei.

Das Flügelelement 43 weist eine erste Leitfläche 44 auf, welche in Richtung der zweiten Vorkammer 17, 117 ausgerichtet ist und eine zweite Leitfläche 45, die in Richtung der Auslassöffnung 20, 120 gerichtet ist. Die zweite Leitfläche 45 weist eine Krümmung auf. Der Normalabstand zwischen der ersten Leitfläche 44 und der zweiten Leitfläche 45 kann in Drehrichtung zunehmen, abnehmen oder gleichbleiben. Die vorderen Enden der ersten und zweiten Leitfläche 44, 45 sind in einem Abstand zueinander angeordnet. Hierdurch wird eine Staufläche 46 gebildet, welche die aus den Komponenten bestehende Füllmasse als Störelement umlenkt und teilt. Der Anteil der Füllmasse, welcher über die zweite Leitfläche 45 geleitet wird, wird durch deren Krümmung in Richtung der Auslassöffnung 20, 120 gefördert. Auch die erste Leitfläche 44 kann eine Krümmung aufweisen. Insbesondere können die Krümmungen der ersten und zweiten Leitfläche 44, 45 gleichartig sein.

Auch ein Flügelelement 53 gemäß Fig. 5 weist eine Ausrichtung in Richtung der Auslassöffnung 120 auf. Die erste Leitfläche 54 weist eine konvexe Krümmung auf. Die zweite Leitfläche 55 weist eine in Bezug auf die Auslassöffnung konkave Oberfläche auf. Die geometrische Ausführung des Flügelelements kann ähnlich dem Flügelelement 43 sein. Insbesondere kann ein Rotorelement nur aus Flügelelementen 53 bestehen.

Vorzugsweise ist gemäß jedem der Ausführungsbeispiele eine Mehrzahl von Flügelelementen am Umfang des Rotorelements angeordnet. Insbesondere kann auch eine Mehrzahl von Flügelelementen in Richtung der Achse des Rotorelements hintereinander angeordnet sein. Herstelltechnisch ist es vorteilhaft, wenn diametral gegenüberliegende Flügelelemente vom gleichen Typ sind. Vorzugsweise sind die hintereinander angeordneten Flügelelemente nicht alle vom gleichen Typ.

## Patentansprüche

1. Dynamischer Mischer (100) für eine Mehrzahl von fluiden Komponenten, enthaltend ein Gehäuse (102) und ein Rotorelement (103), welches in dem Gehäuse (102) drehbar angeordnet ist,
wobei das Gehäuse (102) eine Einlassöffnung (112, 113) für zumindest je eine Komponente und mindestens eine Auslassöffnung (120) aufweist, wobei zwischen dem Rotorelement (103) und dem Gehäuse (102) ein ringförmiger Zwischenraum vorgesehen ist, in welchem ein mit dem Rotorelement (103) verbundenes Mischelement (107) angeordnet ist,
wobei das Mischelement (107) ein Flügelelement (43, 53, 123) aufweist, welches als Leitelement zur Förderung der Komponenten von der Einlassöffnung (112, 113) zu der Auslassöffnung (120) ausgebildet ist,
wobei das Flügelelement (43, 53, 123) eine Leitfläche (45, 55) aufweist, die eine konkave Krümmung bezogen auf die Auslassöffnung (120) aufweist und anströmseitig weiter entfernt von der Auslassöffnung (120) ist als abströmseitig,
wobei das Gehäuse (102) eine erste Vorkammer (121) und eine Hauptkammer (122) aufweist, zwischen denen eine zweite Vorkammer (117) vorgesehen ist, und
wobei die fluiden Komponenten in der ersten Vorkammer (117) erstmals zusammengeführt werden.

2. Dynamischer Mischer (100) nach Anspruch 1,
wobei das Flügelelement (43, 53, 123) nicht mehr als 50% einer durch den Zwischenraum gelegten Ebene überdeckt, welche das Flügelelement (43, 53, 123) enthält und normal auf die Achse des dynamischen Mischers (100) ausgerichtet ist.

3. Dynamischer Mischer (100) nach Anspruch 1 oder 2,
wobei eine Mehrzahl von Flügelelementen (43, 53) in mehreren Reihen senkrecht zur Achse des dynamischen Mischers (100) angeordnet sind.

4. Dynamischer Mischer (100) nach Anspruch 3,
wobei ein erstes Flügelelement (43, 53) und ein zweites Flügelelement (43, 53) stromabwärts des ersten Flügelelements (43, 53) in der Hauptkammer (122) angeordnet sind, wobei der kürzeste Abstand zwischen dem ersten Flügelelement (43, 53) zum zweiten Flügelelement (43, 53) mindestens ein Drittel des Abstandes zwischen dem Rotorelement (103) und der durch das Gehäuse (102) gegebenen Abgrenzung der Hauptkammer (122) ist, wobei der Abstand in Richtung der Achse des dynamischen Mischers (100) gemessen wird.

5. Dynamischer Mischer (100) nach einem der Ansprüche 3 oder 4,
wobei die Flügelelemente (43, 53, 123) anströmseitig eine Staufläche (46, 56) aufweisen, wobei die Ebene der Staufläche (46, 56) parallel zur Achse des Rotorelementes (103) oder in einem Winkel derart angeordnet ist, dass die Staufläche (46, 56) in Richtung der Auslassöffnung (120) weist.

6. Dynamischer Mischer (100) nach einem der vorhergehenden Ansprüche,
wobei das Gehäuse einen ersten Gehäuseteil (104) und einen zweiten Gehäuseteil (104) aufweist, wobei der erste Gehäuseteil (104) die Einlassöffnungen (112, 113) enthält und der zweite Gehäuseteil (104) die Auslassöffnung (120) enthält.

7. Dynamischer Mischer (100) nach einem der vorhergehenden Ansprüche 5 oder 6,
wobei das Flügelelement (43, 53, 123) die anströmseitige Staufläche (46, 56), eine abströmseitige Endfläche, eine sich am äußeren Umfang zwischen anströmseitiger Staufläche (46, 56) und abströmseitiger Endfläche erstreckende Mantelfläche, eine Grundfläche, die den Einlassöffnungen (112, 113) zugewendet ist, sowie eine Deckfläche, die der Auslassöffnung (120) zugewendet ist, aufweist.

8. Dynamischer Mischer (100) nach Anspruch 7,
wobei die Mantelfläche eine den Einlassöffnungen (112, 113) zugewendete Grundkante aufweist, die eine kontinuierliche Krümmung aufweist.

9. Dynamischer Mischer (100) nach Anspruch 8,
wobei der Krümmungsradius der Grundkante von der anströmseitigen Staufläche (46, 56) zur abströmseitigen Endfläche zunimmt.

10. Dynamischer Mischer (100) Anspruch 8 oder 9,
wobei die Grundkante s-förmigen Verlauf hat.

11. Dynamischer Mischer (100) nach einem der Ansprüche 8 bis 10,
wobei der Krümmungsradius der Grundkante von der Anströmseite zur Abströmseite abschnittsweise konstant ist.

12. Dynamischer Mischer (100) nach einem der Ansprüche 7 bis 11,
wobei die Mantelfläche eine der Auslassöffnung (120) zugewendete Deckkante aufweist, welche eine kontinuierliche Krümmung aufweist.

13. Dynamischer Mischer (100) nach einem der Ansprüche 7 bis 12,
wobei sich der Verlauf der Krümmung der Deckkante vom Verlauf der Krümmung der Grundkante unterscheidet.

14. Dynamischer Mischer (100) nach einem der Ansprüche 8 bis 13,
wobei die Krümmung einen minimalen Krümmungsradius von 1 mm und einen maximalen Krümmungsradius von 100 mm aufweist.

15. Dynamischer Mischer (100) nach einem der vorhergehenden Ansprüche,
wobei maximal 5 Reihen von Flügelelementen (43, 53), bevorzugt maximal 4 Reihen, besonders bevorzugt maximal 3 Reihen von Flügelelementen (43, 53) auf dem Rotorelement (103) angeordnet sind.

## Claims

1. A dynamic mixer (100) for a plurality of fluid components, containing a housing (102) and a rotor element (103) which is rotatably arranged in the housing (102),
wherein the housing (102) has an inlet opening (112, 113) for at least one respective component and has at least one outlet opening (120);
wherein a ring-shaped intermediate space is provided between the rotor element (103) and the housing (102) in which intermediate space a mixing element (107) connected to the rotor element (103) is arranged;
wherein the mixing element (107) has a vane element (43, 53, 123) which is formed as a directing element for conveying the components from the inlet opening (112, 113) to the outlet opening (120);
wherein the vane element (43, 53, 123) has a directing surface (45, 55) which has a concave curvature with respect to the outlet opening (120) and is further remote from the outlet opening (120) at the onflow side than at the outflow side;
wherein the housing (102) has a first antechamber (121) and a main chamber (122) between which a second antechamber (117) is provided; and
wherein the fluid components are combined for the first time in the first antechamber (117).

2. A dynamic mixer (100) in accordance with claim 1,
wherein the vane element (43, 53, 123) does not cover more than 50% of a plane laid through the intermediate space, said plane containing the vane element (43, 53, 123) and being aligned normal to the axis of the dynamic mixer (100).

3. A dynamic mixer (100) in accordance with claim 1 or claim 2"
wherein a plurality of vane elements (43, 53) re arranged in a plurality of rows perpendicular to the axis of the dynamic mixer (100).

4. A dynamic mixer (100) in accordance with claim 3,
wherein a first vane element (43, 53) and a second vane element (43, 53) downstream of the first vane element (43, 53) are arranged in the main chamber (122), with the shortest spacing between the first vane element (43, 53) and the second vane element (43, 53) being at least one third of the spacing between the rotor element (103) and the boundary of the main chamber (122) defined by the housing (102), with the spacing being measured in the direction of the axis of the dynamic mixer (100).

5. A dynamic mixer (100) in accordance with one of the claims 3 or 4,
wherein the vane elements (43, 53, 123) have a dam surface (46, 56), with the plane of the dam surface (46, 56) being arranged in parallel with the axis of the rotor element (103) or at an angle such that the dam surface (46, 56) faces in the direction of the outlet opening (121).

6. A dynamic mixer (100) in accordance with any one of the preceding claims,
wherein the housing has a first housing part (104) and a second housing part (104), with the first housing part (104) containing the inlet openings (112, 113) and the second housing part (104) containing the outlet opening (120).

7. A dynamic mixer(100) in accordance with one of the preceding claims 5 or 6,
wherein the vane element (43, 53, 123) has the onflow-side dam surface (46, 56), an outflow-side end surface, a jacket surface extending at the outer periphery between the onflow-side dam surface (46, 56) and the outflow-side end surface, a base surface which faces the inlet openings (112, 113) and a cover surface which faces the outlet opening (120).

8. A dynamic mixer (100) in accordance with claim 7,
wherein the jacket surface has a base edge which faces the inlet openings (112, 113) and which has a continuous curvature.

9. A dynamic mixer (100) in accordance with claim 8,
wherein the radius of curvature of the base edge increases from the onflow-side dam surface (46, 56) to the outflow-side end surface.

10. A dynamic mixer (100) in accordance with claim 8 or claim 9,
wherein the base edge has an s-shaped extent.

11. A dynamic mixer (100) in accordance with any one of the claims 8 to 10,
wherein the radius of curvature of the base edge is sectionally constant from the onflow side to the outflow side.

12. A dynamic mixer (100) in accordance with any one of the claims 7 to 11,
wherein the jacket surface has a top edge which faces the outlet opening (120) and which has a continuous curvature.

13. A dynamic mixer (100) in accordance with any one of the claims 7 to 12,
wherein the extent of the curvature of the top edge differs from the extent of the curvature of the base edge.

14. A dynamic mixer (100) in accordance with any one of the claims 8 to 13,
wherein the curvature has a minimal radius of curvature of 1 mm and a maximum radius of curvature of 100 mm.

15. A dynamic mixer (100) in accordance with any one of the preceding claims,
wherein a maximum of 5 rows of vane elements (43, 53), preferably a maximum of 4 rows, particularly preferably a maximum of 3 rows, of vane elements (43, 53) are arranged on the rotor element (103).

## Revendications

1. Mélangeur dynamique (100) pour une pluralité de composants fluides, comprenant un boîtier (102) et un élément de rotor (103) qui est agencé avec possibilité de rotation dans le boîtier (102),
dans lequel le boîtier (102) comporte une ouverture d'entrée (112, 113) pour au moins un composant respectif et au moins une ouverture de sortie (120),
dans lequel un espace intermédiaire de forme annulaire est prévu entre l'élément de rotor (103) et le boîtier (102), espace dans lequel est agencé un élément mélangeur (107) relié à l'élément de rotor (103), dans lequel l'élément mélangeur (107) comprend un élément en forme d'aube (43, 53, 123), qui est réalisé comme un élément guide pour le convoyage des composants depuis l'ouverture d'entrée (112, 113) jusqu'à l'ouverture de sortie (120),
dans lequel l'élément en forme d'aube (43, 53, 123) comporte une surface guide (45, 55) qui présente une courbure concave par référence à l'ouverture de sortie (120), et qui du côté incident de l'écoulement se trouve plus éloigné de l'ouverture de sortie (120) que du côté sortant de l'écoulement,
dans lequel le boîtier (102) comprend une première chambre préliminaire (121) et une chambre principale (122) entre lesquelles est prévue une seconde chambre préliminaire (117), et
dans lequel les composants fluides sont rassemblés pour la première fois dans la première chambre préliminaire (117).

2. Mélangeur dynamique (100) selon la revendication 1, dans lequel l'élément en forme d'aube (43, 53, 123) ne couvre pas plus de 50 % d'un plan passant à travers l'espace intermédiaire, qui contient l'élément en forme d'aube (43, 53, 123) et qui est orienté perpendiculairement à l'axe du mélangeur dynamique (100).

3. Mélangeur dynamique selon la revendication 1 ou 2,
dans lequel une pluralité d'éléments en forme d'aube (43, 53) sont agencés en plusieurs rangées perpendiculairement à l'axe du mélangeur dynamique (100).

4. Mélangeur dynamique (100) selon la revendication 3,
dans lequel un premier élément en forme d'aube (43, 53) et un second élément en forme d'aube (43, 53) sont agencés en aval du premier élément en forme d'aube (43, 53) dans la chambre principale (122), et la plus courte distance entre le premier élément en forme d'aube (43, 53) et le second élément en forme d'aube (43, 53) est au moins un tiers de la distance entre l'élément de rotor (103) et la délimitation de la chambre principale (122) définie par le boîtier (102), ladite distance étant mesurée dans la direction de l'axe du mélangeur dynamique (100).

5. Mélangeur dynamique (100) selon l'une des revendications 3 ou 4,
dans lequel les éléments en forme d'aube (43, 53, 123) présentent du côté de l'écoulement incident une surface de retenue (46, 56), dans lequel le plan de la surface de retenue (46, 56) est agencé parallèlement à l'axe de l'élément de rotor (103) ou sous un angle tel que la surface de retenue (46, 56) est tournée en direction de l'ouverture de sortie (120).

6. Mélangeur dynamique (100) selon l'une des revendications précédentes,
dans lequel le boîtier comprend une première partie de boîtier (104) et une seconde partie de boîtier (104), dans lequel la première partie de boîtier (104) contient les ouvertures d'entrée (112, 113) et la seconde partie de boîtier (104) contient l'ouverture de sortie (120).

7. Mélangeur dynamique (100) selon l'une des revendications 5 ou 6,
dans lequel l'élément en forme d'aube (43, 53, 123) comporte la surface de retenue (46, 56) du côté de l'écoulement incident, une surface terminale du côté de l'écoulement sortant, une surface enveloppe s'étendant à la périphérie extérieure entre la surface de retenue (46, 56) du côté de l'écoulement incident et la surface terminale du côté de l'écoulement sortant, une surface de base, qui est tournée vers les ouvertures d'entrée (112, 113), ainsi qu'une surface de couverture qui est tournée vers l'ouverture de sortie (120).

8. Mélangeur dynamique (100) selon la revendication 7,
dans lequel la surface enveloppe présente une arête de base tournée vers les ouvertures d'entrée (112, 113), laquelle présente une courbure continue.

9. Mélangeur dynamique (100) selon la revendication 8,
dans lequel le rayon de courbure de l'arête de base augmente depuis la surface de retenue (46, 56) du côté de l'écoulement incident vers la surface terminale du côté de l'écoulement sortant.

10. Mélangeur dynamique (100) selon la revendication 8 ou 9,
dans lequel l'arête de base a un tracé en forme de s.

11. Mélangeur dynamique (100) selon l'une des revendications 8 à 10,
dans lequel le rayon de courbure de l'arête de base est constant par tronçons depuis le côté de l'écoulement incident vers le côté de l'écoulement sortant.

12. Mélangeur dynamique (100) selon l'une des revendications 7 à 11,
dans lequel la surface enveloppe comporte une arête de couverture tournée vers l'ouverture de sortie (120), arête qui présente une courbure continue.

13. Mélangeur dynamique (100) selon l'une des revendications 7 à 12,
dans lequel le tracé de la courbure de l'arête de couverture est différent du tracé de la courbure de l'arête de base.

14. Mélangeur dynamique (100) selon l'une des revendications 8 à 13,
dans lequel la courbure présente un rayon de courbure minimum de 1 mm et un rayon de courbure maximum de 100 mm.

15. Mélangeur dynamique (100) selon l'une des revendications précédentes, dans lequel au maximum cinq rangées d'éléments en forme d'aube (43, 53), de préférence au maximum quatre rangées et de manière particulièrement préférée au maximum trois rangées d'éléments en forme d'aube (43, 53) sont agencées sur l'élément de rotor (103).
